# EUROPÄISCHE PATENTSCHRIFT

(11) **EP 0 618 950 B1**
(45) Veröffentlichungstag und Bekanntmachung des Hinweises auf die Patenterteilung: **30.07.1997**
(21) Anmeldenummer: 93901681.2
(22) Anmeldetag: 15.12.1992
(51) Int. Cl.: C09K 21/14, C09D 5/18

(54) **BRANDSCHUTZMASSE UND IHRE VERWENDUNG**
FIRE-PROTECTION COMPOUND
MATIERE IGNIFUGE ET SON UTILISATION

(30) Priorität: 24.12.1991 DE 4142903
(43) Veröffentlichungstag der Anmeldung: 12.10.1994
(73) Patentinhaber: Grünau Illertissen GmbH, D-89257 Illertissen (DE)
(72) Erfinder: ANNEMAIER, Dieter, D-7901 Illerkirchberg (DE); GRAF, Robert, D-7919 Altenstadt-Filzingen (DE)
(74) Vertreter: Wilk, Hans-Christof, Dr.
(86) Internationale Anmeldenummer: EP9202908
(87) Internationale Veröffentlichungsnummer: WO9313183

(56) Entgegenhaltungen:
- EP-A- 0 281 226
- EP-A- 0 459 784
- DE-A- 3 637 923
- DATABASE WPIL Week 8706, Derwent Publications Ltd., London, GB; AN 87-041003 ; & JP-A-62 000 564

## Beschreibung

Die Erfindung betrifft eine Brandschutzmasse, die Bindemittel, Flammschutzmittel, Fasern und Weichmacher enthält, sowie die Verwendung der Brandschutzmasse.

Insbesondere im Bauwesen ist es erforderlich, daß die verwendeten Bauteile, wie beispielsweise Decken, Wände, Trennwände, Träger und Stützen usw. einen ausreichenden Feuerwiderstand besitzen. Zu diesem Zweck gibt es gesetzliche Vorschriften, die im einzelnen vorschreiben, über welchen Zeitraum die Bauteile einem Brand standhalten müssen. Durchbrüche und Öffnungen in solchen Bauteilen (Kabeldurchführungen, Schlitze für Rohre oder Fugen) müssen den gleichen Feuerwiderstand besitzen wie die Bauteile, in denen sie sich befinden. Es findet deshalb eine Vielzahl von Brandschutzmassen Verwendung, mit denen die Bauteile zum Erreichen des Brandschutzes beispielsweise beschichtet sind oder die zur Erhöhung des Feuerwiderstandes der Abdichtungssysteme für die Durchbrüche eingesetzt werden.

Die Mäntel und Isolierungen elektrischer Kabel und Kunststoffrohre bestehen aus brennbaren Materialien, die nach der Entzündung das Feuer sehr rasch weiterleiten können und zusätzlich die Gefahr der Verqualmung von Arbeitsstätten und Fluchtwegen und zugleich der Bildung von korrosiven oder toxischen Verbrennungsprodukten in sich bergen. Durch Brandschutzbeschichtungen läßt sich die Gesamtheit dieser Risiken minimieren.

In der deutschen Patentschrift DE-PS 20 65 117 ist eine Feuerschutzmasse offenbart, die in einer wäßrigen Kunststoffemulsion neben anderen Substanzen chlorierte Kohlenwasserstoffe, Antimontrioxid und Asbestfasern enthält. Diese Masse wird als Schutzüberzug für elektrische Kabel verwendet. Allerdings entwickelt die chlorhaltige Masse im Brandfall neben Chlorverbindungen auch Chlorwasserstoffgas, das nicht nur giftig ist, sondern auch in hohem Maße korrosiv wirkt. Die in der DE-PS 20 65 117 beschriebene Feuerschutzmasse enthält darüber hinaus Antimontrioxid, das als krebserzeugender Stoff angesehen wird, sowie Asbestfasern, deren gesundheitsschädigende Wirkung in der Zwischenzeit allgemein bekannt ist.

Auch in der deutschen Patentschrift DE-PS 20 39 969 ist eine Feuerschutzmasse beschrieben, die chlorierte Kohlenwasserstoffe enthält. Als weitere Komponenten der Masse können auch Asbest und Antimonverbindungen vorgesehen sein. Deshalb hat auch die Feuerschutzmasse nach der DE-PS 20 39 969 die obengenannten nachteiligen Eigenschaften und zeigt nachteilige gesundheitsschädigende Auswirkungen.

Die in der deutschen Offenlegungsschrift DE-OS 27 24 604 offenbarte Feuerschutzmasse vermeidet zwar den Einsatz von Asbestfasern, enthält aber weiterhin chlorierte Kohlenwasserstoffe und Antimontrioxid. Damit zeigt auch die Feuerschutzmasse nach dieser Druckschrift nachteilige gesundheitsschädigende Auswirkungen.

Die Verwendung einer feuerhemmenden Masse zum Überziehen von elektrischen Kabeln und zum Beschichten von Kabelschächten zeigt die deutsche Patentschrift DE-PS 28 44 693. Diese Druckschrift stellt sich die Aufgabe, die bereits beschriebene Feuerschutzmasse gemäß der DE-PS 20 39 969 derart zu verändern, daß auf den Einsatz von Asbest verzichtet werden kann. Die nach der DE-PS 28 44 693 verwendete Masse enthält aber weiterhin eine organische Halogenverbindung sowie ggf. zusätzlich eine Antimonverbindung, was zu den bereits beschriebenen Nachteilen führt.

Weiter sind aus dem Stand der Technik auch halogenfreie Brandschutzmassen bekannt, die aber große Mengen an gesundheitsschädlichen Antimonverbindungen, wie beispielsweise Antimontrioxid, enthalten. Diese zeigen trotz hoher Dosierung an Antimonverbindungen nur schlechte Brandschutzeigenschaften. Es ist beispielsweise nicht möglich, mit einem handelsüblichen Produkt dieser Art, Kabel mit halogenfreiem Mantel und halogenfreier Isolierung, wie Telefonkabel mit PE-Mänteln, -isolierungen so zu schützen, daß die Anforderungen von DIN 4102, Teil 1 (Baustoffklasse B1 - schwerentflammbare Baustoffe) erreicht werden.

Wegen der Risiken bei PVC-Kabelbränden (starke Verqualmung, Entwicklung von toxischen und korrosiven Gasen) gibt es auch vielfache Versuche, PVC durch Polyolefine oder durch halogenfreie Elastomere zu ersetzen. Die Brandrisiken bei diesen neuen Kabeltypen sind vielfach nicht geringer als die von PVC-Kabeln, sondern können sogar höher sein.

Die vorliegende Erfindung stellt sich die Aufgabe, eine Brandschutzmasse zur Verfügung zu stellen, die die Umwelt und die menschliche Gesundheit wesentlich weniger belastet als die aus dem Stand der Technik bekannten Brandschutzmassen. Die Brandschutzeigenschaften der erhaltenen Masse sollen trotzdem gut sein und insbesondere die gesetzlichen Vorschriften erfüllen. Zusätzlich soll die Brandschutzmasse insbesondere auch in der Lage sein, die inzwischen in allen Industrieländern auf den Markt kommenden PVC-freien Kabel wirksam gegen Entzündung und Brandweiterleitung zu schützen.

Gelöst wird diese Aufgabe durch eine Brandschutzmasse, enthaltend Bindemittel, Flammschutzmittel, anorganische Fasern und Weichmacher, dadurch gekennzeichnet, daß sie frei von Antimonverbindungen, Asbest und gesundheitsschädlichen Flammhemmern, insbesondere halogenhaltigen Flammhemmern ist, mit der Maßgabe, daß
a) als Bindemittel Polymere enthalten sind, wobei die Polymeren eine Glasübergangstemperatur Tg oberhalb -30 °C, eine Mindestfilmbildetemperatur MFT von ≥ 0 °C, eine Reißfestigkeit ≤ 5 N/mm² und eine Reißdehnung ≥ 400 % besitzen sollen und wobei das Bindemittel in einer Menge von 5 bis 20 Gew.-% - bezogen auf die Gesamtmasse der Brandschutzmasse - enthalten ist,
b) die als Flammschutzmittel enthaltenen Stoffe wasserunlösliche Feststoffe mit einem mittleren Korndurchmesse von 1 bis 50 µm sind,
c) die anorganischen Fasern eine mittlere Länge von 300 µm und eine mittlere Dicke von 10 µm aufweisen, wobei die Fasern in einer Gesamtmenge von 0,2 bis 27,5 Gew.-% - bezogen auf die Gesamtmasse der Brandschutzmasse - enthalten sind.

Durch den Verzicht auf Antimonverbindungen, Asbest und die gesundheitsschädlichen, vorzugsweise halogenhaltigen Flammhemmer werden die Brandschutzeigenschaften der Masse überraschenderweise nicht beeinträchtigt. Die baurechtlichen Vorschriften bzgl. der Brandschutzeigenschaften werden erreicht. Gleichzeitig ist die erhaltene Brandschutzmasse umweltverträglich und physiologisch harmlos, da keine Antimonverbindungen und kein Asbest enthalten sind sowie aus den Flammhemmern im Feuer keine gesundheitsschädlichen Substanzen, wie insbesondere Halogenwasserstoffe, sonstige Halogenverbindungen oder freie Halogene, freigesetzt werden. Die erfindungsgemäße Brandschutzmasse weist bei Gebrauchstemperatur eine gute Wärmeleitfähigkeit auf. Dies führt dazu, daß die bei Kabeln unter elektrischer Last entstandene Wärme gut abgeführt wird.

Es ist nach der Erfindung bevorzugt, wenn nicht nur die Flammhemmer, sondern die gesamte Brandschutzmasse halogenfrei ist. Insbesondere kann die Brandschutzmasse in diesem Fall in ihrer Gesamtheit chlorfrei sein, da insbesondere Chlorverbindungen als Bestandteile in üblichen Brandschutzmassen Verwendung finden. Durch die beschriebene Halogenfreiheit wird eine noch bessere Umweltverträglichkeit der Brandschutzmasse erreicht, weil im Brandfall keine giftigen oder korrosiven Halogenwasserstoffe oder sonstigen Halogenverbindungen frei gesetzt werden können.

Als Bindemittel sind in der Brandschutzmasse vorzugsweise wäßrige Kunststoff- oder Kunstharzdispersionen enthalten, wobei diese bevorzugt halogen-frei sind. Dabei können als Bindemittel übliche Homo-, Co- oder Terpolymere Verwendung finden, wobei Co- oder Terpolymere bevorzugt sind. Beispielsweise sind als verwendbare halogenfreie Comonomere Ethylen, Vinyllaurat, Versatat und Acrylat zu nennen. Besonders vorteilhafte Copolymere sind solche, die mindestens einen Vinylacetatanteil enthalten. Durch den Vinylacetatanteil wird eine besonders gute Haftvermittlung der Bestandteile der Brandschutzmasse untereinander oder der Brandschutzmasse mit dem Untergrund, auf den diese aufgebracht wird, erreicht. Bevorzugte Bindemittel sind beispielsweise Ethylen-Vinylacetat-Copolymere.

Die nach der Erfindung verwendbaren Polymere, insbesondere die Copolymere, haben vorzugsweise eine Glasübergangstemperatur Tg oberhalb -30 °C, eine Mindestfilmbildetemperatur MFT von ≥ 0 °C, eine Reißfestigkeit ≤ 5 N/mm² und eine Reißdehnung ≥ 400 %. Durch solche Copolymere werden eine gute Konsistenz und damit Verarbeitbarkeit der Brandschutzmasse sowie gute mechanische und physikalische Eigenschaften der auf einen Untergrund aufgebrachten Brandschutzmasse erreicht.

Bezogen auf die Gesamtmenge der Brandschutzmasse (naß) ist das Bindemittel erfindungsgemäß in einer Menge von 5 bis 20 Gew.%, insbesondere 7,5 bis 15 Gew.% Trockenmasse Bindemittel enthalten. Die Konsistenz und Viskosität der Brandschutzmasse kann durch Änderung der Menge an Bindemittel über einen großen Bereich variiert werden. Dabei kann die Menge an Bindemittel in Abstimmung mit dem Gehalt an anderen Bestandteilen der Brandschutzmasse, wie beispielsweise Füllstoffen, geändert werden, um gezielt eine bestimmte Konsistenz der Brandschutzmasse einzustellen.

Die als Flammschutzmittel in der erfindungsgemäßen Brandschutzmasse enthaltenen wasserunslöslichen Feststoffe sind vorzugsweise halogen-frei und/oder frei von toxikologisch und ökologisch bedenklichen Verbindungen, insbesondere Schwermetallverbindungen. Gerade diese Maßnahme trägt dazu bei, daß eine umweltverträgliche Brandschutzmasse erhalten wird. Vorzugsweise sind die genannten Stoffe wasserunlöslich. Dies hat den Vorteil, daß sie aus der Brandschutzmasse nicht im Laufe der Zeit herausgelöst werden, wenn die Brandschutzmasse mit Luftfeuchtigkeit oder in sonstiger Weise mit Wasser in Berührung kommt.

In der Brandschutzmasse ist das Flammschutzmittel vorzugsweise in einer Menge von 10 bis 60 Gew.%, insbesondere 20 bis 50 Gew.%, enthalten, wobei diese Mengen auf die Gesamtmenge an Brandschutzmasse in deren Naßphase bezogen sind.

Als Flammschutzmittel sind insbesondere anorganische Feststoffe enthalten, die beim Erhitzen (also beispielsweise im Brandfall) endotherm reagieren. Diese endotherme Reaktion kann vorzugsweise in einem Schmelzen, einem Sublimieren, einer Phasenumwandlung oder in einer Festkörperreaktion bestehen. Die endotherme Reaktion kann dabei unter Abspaltung von Gasen erfolgen, wobei es bevorzugt ist, wenn nicht brennbare Gase abgespalten werden. Die abgespaltenen Gase, die im Brandfall aus der Brandschutzmasse austreten, sind beispielsweise Wasser (in Form von Dampf bzw. Gas), Kohlendioxid und Ammoniak.

Die als Flammschutzmittel verwendbaren Feststoffe besitzen einen mittleren Korndurchmesser von 1 bis 50 µm, insbesondere einem mittleren Korndurchmesser von 2 bis 30 µm. Aufgrund der feinen Körnung wird die Reaktionsfähigkeit stark erhöht.

Bei den beschriebenen Flammschutzmitteln kann es sich beispielsweise um Hydroxide, Carbonate, Phosphate, Borate oder Stannate handeln. Beispiele für solche Verbindungen sind Aluminiumhydroxid, Zinkborat, Ammoniumpolyphosphat, Magnesiumhydroxocarbonat und Magnesiumhydroxid. Als weitere verwendbare Verbindungen können Zinkstannat und Zinkhydroxostannat erwähnt werden. Diese beispielhaft genannten Verbindungen entfalten ihre flammhemmende Wirkung oberhalb unterschiedlicher Temperaturen. Magnesiumhydroxid zeigt die flammhemmende Wirkung zum Beispiel bei höheren Temperaturen als die übrigen genannten Verbindungen und Magnesiumhydroxocarbonat entfaltet seine Wirkung über einen breiten Temperaturbereich. Die allgemein und beispielhaft genannten Verbindungen können auch als Mischungen eingesetzt werden. Dies hat den Vorteil, daß die Temperaturen, bei denen die flammhemmende Wirkung auftrifft, in Abhängigkeit von den Mischungsbestandteilen und der Mischungszusammensetzung variiert oder eingestellt werden können. Bei einer Verwendung von Mischungen ist eine Kombination von Aluminium- und Zinkverbindungen vorteilhaft, da bei solchen Mischungen Wirkungen erzielt werden, die über die Summe der Einzelwirkungen hinausgehen (Synergie). So können beispielsweise Zinkstannat und Zinkhydroxostannat in Kombination mit Aluminiumhydroxid verwendet werden.

Mischungen aus 80 bis 98 Gew.% Aluminiumhydroxid und 2 bis 20 Gew.% Zinkborat sind nach der Erfindung besonders vorteilhaft als Flammschutzmittel einsetzbar.

Die in der Brandschutzmasse enthaltenen Fasern sind in einer Gesamtmenge von 0,2 bis 27,5 Gew.%, bezogen auf die Gesamtmenge der Brandschutzmasse (naß), enthalten. Vorzugsweise werden nach der Erfindung nur anorganische Fasern in der Brandschutzmasse verwendet. Die anorganischen Fasern bedingen eine größere Oberflächenrauhigkeit der Brandschutzmasse. Dadurch wird deren Wärmeabstrahlung beispielsweise bei der Verwendung als Kabelbrandschutzmasse bei Gebrauchstemperatur deutlich verbessert. Zusätzlich verbessern diese Fasern die mechanischen Eigenschaften der Beschichtung (geringere Risseempfindlichkeit bei mechanischer Belastung, wie Biegung etc.) und verhindern zusätzlich im Feuer das Aufplatzen der Brandschutzschicht.

Weiter bevorzugt nach der Erfindung ist eine Brandschutzmasse, in der eine Mischung aus anorganischen und organischen Fasern enthalten ist. Da die organischen Fasern im Vergleich zu den anorganischen Fasern eine stärkere Oberflächenstruktur besitzen, wird durch eine Zumischung dieser Fasern die Standfestigkeit und Haftfähigkeit der Brandschutzmasse insgesamt erhöht. Durch das Mischungsverhältnis von anorganischen zu organischen Fasern kann eine Variation der Oberflächenrauhigkeit der Brandschutzmasse, ihrer mechanischen Eigenschaften und der Verarbeitungswilligkeit erreicht werden. Bei solchen Mischungen sind die anorganischen und organischen Fasern, bezogen auf die Gesamtmasse an Brandschutzmasse (naß), in Mengen von 0,1 bis 20 Gew.% bzw. 0,1 bis 7,5 Gew.% enthalten, wobei wiederum Gehalte von 0,5 bis 10 Gew.% anorganische Fasern bzw. 0,1 bis 3,5 Gew. % organische Fasern bevorzugt sind.

Die anorganischen Fasern besitzen vorzugsweise eine mittlere Dicke von 10 µm und eine mittlere Länge von 300 µm. Die organischen Fasern weisen insbesondere eine mittlere Dicke von 15 µm und eine mittlere Länge von 1000 µm auf. Als anorganische Fasern können Schlacken- Mineral-, Glas- und Keramikfasern verwendet werden. Organische Fasern sind beispielsweise Polyethylen-, Polyoxymethylen-, Polypropylen-, Polyester-, Polyacrylnitril-, Polyamid-, Viskose- oder Cellulosefasern.

Die Weichmacher in der erfindungsgemäßen Brandschutzmasse sind vorzugsweise in einer Menge von 0,1 bis 10 Gew.%, insbesondere 1 bis 5 Gew.%, enthalten, wobei diese Mengen wiederum auf die Gesamtmasse an Brandschutzmasse (naß) bezogen sind. Vorzugsweise sind als Weichmacher toxikologisch unbedenkliche Phosphorsäureester enthalten, die insbesondere halogenfrei sind. Dabei können die Phosphorsäureester einen Phosphorgehalt ≥ 7 % besitzen. Mindestens eine Säurefunktion des Phosphorsäureesters kann dabei mit einem aromatischen Rest abgesättigt sein.

Die erfindungsgemäße Brandschutzmasse kann als weitere Bestandteile Füllstoffe und/oder Verdickungsmittel enthalten, wie sie üblicherweise bei Brandschutzmassen verwendet werden. Solche Füllstoffe sind beispielsweise Talkum, Kalkstein, Muschelkalk, Kreide, Dolomit, Magnesit, Basalt, Glimmer oder Feldspat. Einsetzbare Verdickungsmittel sind beispielsweise Cellulosederivate, wie Hydroxymethyl- oder Hydroxyethylcellulose, Alginate oder Galaktomannane. Zweckmäßigerweise können auch übliche Konservierungsadditive, übliche Dispergieradditive, Netzmittel und Entschäumer enthalten sein, die die Haltbarkeit der Brandschutzmasse verbessern bzw. ihre Herstellung erleichtern.

Nach der Erfindung kann die beschriebene Brandschutzmasse zur Herstellung von Brandschutzbeschichtungen und Brandschutzabschlüssen verwendet werden. Beispielsweise kann sie zur Beschichtung von Kabeln, Trennwänden oder Oberflächen von anderen Bauteilen eingesetzt werden. Dabei wird die Brandschutzmasse beispielsweise direkt auf die Kabel aufgebracht. Auch eine Beschichtung von Stahl, wie beispielsweise Stahlblechen oder Stahlträgern, als Hitzeschutz gegen hohe Temperaturen ist möglich. Übliche Brandschutzabschlüsse, bei denen die Brandschutzmasse verwendet werden kann, sind beispielsweise Abschottungen und Verfugungen.

Je nach Anwendung oder Verarbeitungsweise kann dabei die Konsistenz bzw. Viskosität der Brandschutzmasse eingestellt werden. Je nach Viskosität kann die Brandschutzmasse dann durch Spritzen, Streichen, Sprühen, Spachteln, Pinseln u.a. verarbeitet werden. So ist es möglich, die Viskosität der Brandschutzmasse so einzustellen, daß sie die Konsistenz von flüssiger Schokolade besitzt. Diese Masse kann für die Verarbeitung in dicken Schichten von beispielsweise 4 mm vorteilhaft sein oder für Anwendungszwecke, bei denen die Brandschutzmasse vertikal oder über Kopf arbeitend angebracht werden muß.

Die Einstellung der Viskosität der Brandschutzmasse kann über den Gehalt an Bindemittel, Fasern oder Füllstoff erfolgen. Gegebenenfalls kann auch zusätzlich Wasser zu der Masse zugegeben werden oder ein übliches Thixotropiermittel, wie beispielsweise Cellulosether, Alginat oder Galactomannan.

Die Erfindung betrifft auch ein Brandschutzmaterial in trockenem, kompaktem Zustand in Form einer Beschichtung und/oder eines Brandschutzabschlusses. Dieses Brandschutzmaterial ist unter Verwendung der beschriebenen Brandschutzmasse hergestellt und frei von Antimonverbindungen, Asbest und gesundheitsschädlichen Flammhemmern, insbesondere halogenhaltigen Flammhemmern. Nach der Verarbeitung der beschriebenen Brandschutzmasse befindet sich das erfindungsgemäße Brandschutzmaterial beispielsweise auf der Oberfläche von Kabeln, Trennwänden oder Oberflächen von Bauteilen oder liegt als Abdichtmaterial von Fugen vor.

Vorzugsweise ist das Brandschutzmaterial insgesamt frei von Halogen, insbesondere chlorfrei. Das erfindungsgemäße Brandschutzmaterial hat den Vorteil, daß es eine höhere Umweltverträglichkeit als bisher bekannte Brandschutzmaterialien besitzt.

In einem Temperaturbereich von 100 bis 800 °C geht das erfindungsgemäße Brandschutzmaterial vom weichflexiblen in den spröd-harten Zustand über. Die damit verbundene höhere mechanische Festigkeit kann sich im Brandfall positiv auswirken, da das Brandschutzmaterial beispielsweise einem Löschstrahl mit hohem Wasserdruck einen größeren Widerstand entgegensetzt. Insbesondere ist das Brandschutzmaterialwasser- und witterungsbeständig, dauerflexibel und ablativ wirksam. Damit kann es seine Feuerschutzwirkung auch nach längerer Zeit und in einer Umgebung entfalten, bei der das Brandschutzmaterial Feuchtigkeit, der Witterung oder mechanischen Belastungen ausgesetzt ist.

Weitere Merkmale der Erfindung ergeben sich aus den nachfolgenden Beschreibungen von bevorzugten Ausführungsformen in Verbindung mit den Unteransprüchen. Hierbei können die einzelnen Merkmale jeweils für sich oder zu mehreren in Kombination miteinander verwirklicht sein.

### Beispiele

### Beispiel 1

In einem Rührbehälter werden 13,1 Gew.% Wasser mit 0,3 Gew.% einer Hydroxymethylcellulose, 0,4 Gew.% Konservierungsmittel auf Basis von Triazolidinopyridazindion Derivaten und 0,6 Gew.% Dispergieradditiv auf Basis von anionischen Acrylcopolymeren vorgelegt. Dazu werden unter Rühren 5 Gew.% Glasfasern (Durchmesser 8 - 16 µm, Länge 0,1 - 2000 µm) und 0,75 Gew.% Polyethylen-Faser (Durchmesser 5 - 20 µm, Länge 800 - 1500 µm) gegeben. Nach einer Dispergierzeit von 30 Minuten werden 34,0 Gew.% einer 50 %igen wäßrigen Vinylacetat/Versatat-Copolymerdispersion zugegeben und dann nacheinander 5 Gew. % eines Diphenyldecylphosphates, 35 Gew.% Aluminiumhydroxid, 2,5 Gew.% Zinkborat und 3,35 Gew.% Calciumcarbonat zugesetzt. Man erhält hierbei eine hochviskose Beschichtungsmasse. Diese Masse wird mit einer Trockenauftragsstärke von 2,5 mm auf ein Kabelbündel, bestehend aus drei PVC-Kabeln NYY-J 3 x 1,5 mm², aufgetragen. Der Beschichtungsfilm besitzt eine Shore A-Härte von 36, eine Reißfestigkeit von 0,2 N/mm² und eine Reißdehnung von 195 %. Die aufgetragene Masse besteht mit einer Restlänge von > 30 cm die Prüfung nach SS 424 14 75 Klasse F 3.

### Beispiel 2

In einer Kugelmühle wird eine wäßrige Verdickerlösung, bestehend aus 24 Gew.% Wasser, 0,4 Gew.% Hydroxyethylcellulose, 0,8 Gew.% Dispergieradditiv auf Basis von anionischen Acrylcopolymeren und 0,4 Gew.% Konservierungsmittel auf Basis von Triazolidinopyridazinion Derivaten, hergestellt. Hierzu gibt man 25,5 Gew.% Aluminiumhydroxid und 9,2 Gew.% Zinkborat, um zu vermahlen bis ein Grindometerwert < 63 µm erreicht wird. Zu diesem Mahlgut gibt man im Dissolver 18,5 Gew.% einer 56 %igen Polyvinylacetat/Ethylen-Copolymerdispersion sowie eine Mischung aus 1,5 Gew.% Glasfasern (Durchmesser 8 - 16 µm, Länge 0,1 - 2000 µm) und 3,2 Gew.% Cellulosefasern (Durchmesser 5 - 30 µm, Länge 0,1 - 2000 µm) sowie 2,1 Gew.% eines Diphenylkresylphosphates und 14,4 Gew.% Calciumcarbonat. Hierbei erhält man eine hochviskose Brandschutzbeschichtungsmasse. Diese Masse wird mit einer Trockenauftragsstärke von 2,5 mm auf ein Kabelbündel, das aus drei PVC-Kabeln NYY-J 3 x 1,5 mm² besteht, aufgetragen. Der Beschichtungsfilm besitzt eine Shore A-Härte von 83, eine Reißfestigkeit von 1,6 N/mm² und eine Reißdehnung von 10 %. Die Prüfung nach SS 424 14 75 Klasse F 3 besteht die Beschichtung mit einer Restlänge von > 30 cm.

### Beispiel 3

In einem Dissolver wird eine Verdickerlösung, bestehend aus 25 Gew.% einer 60 %igen Vinylacetat-Homopolymerdispersion, 14,4 Gew.% Wasser und 1,0 Gew.% einer Hydroxymethylcellulose, hergestellt. Nachdem 0,3 Gew.% Konservierungsmittel auf Basis von Triazolidinopyridazindion Derivaten und 0,7 Gew.% Kaliumtriphosphat zugesetzt worden sind, werden unter Rühren 3,5 Gew.% Mineralfasern (Durchmesser 2 - 12 µm, Länge 0,1 - 3000 µm) und anschließend 1 Gew.% Polyacrylnitrilfasern (Durchmesser 5 -20 µm, Länge 200 - 1200 µm) zugesetzt. Nach einer Dispergierzeit von 60 Minuten gibt man 4,5 Gew.% Trioctylphosphat, 15 Gew.% Aluminiumhydroxid, 10 Gew.% Magnesiumhydroxid, 3,5 Gew.% Zinkhydroxystannat, 13,5 Gew.% Talkum und 9 Gew.% calciniertes Kaolin zu. Man erhält eine zähviskose Kittmasse, die zur Herstellung von Brandschutzfugen geeignet ist.

Eine 30 mm breite Fuge in einer 100 mm dicken Betonplatte wird beidseitig 40 mm tief mit dem hergestellten Kitt verfugt. Als Hinterfüllung wird zwischen den Kittstreifen lose Mineralwolle eingestopft.

Bei einer Bauteilprüfung nach DIN 4102 Teil 2 weist die Fuge eine Feuerwiderstandsdauer von mehr als 90 Minuten auf.

### Beispiel 4

In einem Turbulentmischer wird aus 20,8 Gew.% Wasser, 0,4 Gew.% Kaliumtriphosphat, 23,6 Gew.% einer 55 %igen Vinylacetat-Ethylen-Copolymerdispersion, 20 Gew.% Magnesiumhydroxid, 15 Gew.% Aluminiumhydroxid und 10 Gew.% Calciumcarbonat eine Pigmentpaste hergestellt. Zu dieser Paste gibt man unter fortgesetztem Mischen 0,2 Gew.% Galaktomannan, 0,5 Gew.% Konservierungsmittel auf Basis von Triazolidinopyridazindion Derivaten und 0,3 Gew.% Mineralölentschäumer. Anschließend werden 5,7 Gew.% einer Mischung aus 12,3 Gew.% Polyethylenfaser (Durchmesser 5 -20 um, Länge 800 - 1500 µm) und 87,7 Gew.% Keramikfaser (Durchmesser 0,5 - 15 µm, Länge 0,1 - 2000 µm) zugesetzt und 40 Minuten dispergiert. Abschließend werden 3,5 Gew.% Diphenyldecylphosphat und 10 Gew.% Calciumcarbonat zugemischt. Man erhält eine hochviskose Brandschutzbeschichtung, deren trockener Film eine Shore A-Härte von 78, eine Reißfestigkeit von 1,0 N/mm² und eine Reißdehnung von 20,8 % besitzt. Werden Kabeltrassen, die mit PE-Kabeln 6 x 2 x 0,6 mm² belegt sind und auf ihrer gesamten Oberfläche mit 3 mm (Trockenschichtdicke) der hochviskosen Brandschutzbeschichtung geschützt sind, einem Brandversuch nach DIN 4102 Teil 1 unterzogen, so erhält man eine Restlänge von mehr als 15 cm und eine Rauchgastemperatur < 200 °C.

### Beispiel 5

Durch eine Öffnung von 40 x 70 cm in einer 20 cm dicken Mauerwerkswand laufen drei Kabelleitern und eine Kabelpritsche, die mit Kabeln, entsprechend der DIN 4102 Teil 9, belegt sind. Die verbleibende Restöffnung zwischen Kabeltrassen/Kabeln und Wand wird zunächst mit Mineralfaserplatten von 60 mm Dicke und 150 kg/m³ Dichte, die paßgenau zugeschnitten werden, so verschlossen, daß die Wandoberflächen jeweils mit der Mineralfaserplattenoberfläche bündig ist. Die verbleibenden Fugen zwischen den Mineralfaserplattenpaßstücken und der Wand sowie den Kabeltragevorrichtungen/Kabeln werden mit einem Brandschutzkitt nach Beispiel 3 verfugt. Danach wird die gesamte Oberfläche der Mineralfaserplatten mit einer Brandschutzbeschichtung nach Beispiel 4 in einer Trockenschichtdicke von 3 mm beschichtet. Die gleiche Beschichtungsmasse in analoger Dicke wird zusätzlich auf die Kabeltragevorrichtung und die Kabel, auf einer Länge von 50 cm ab Mineralfaserplattenoberfläche gerechnet, aufgebracht. Wird das so hergestellte Bauteil einer Brandprüfung unterzogen, so erfüllt es sämtliche Anforderungen der DIN 4102 Teil 9 über eine Zeitdauer von mehr als 90 Minuten.

## Patentansprüche

1. Brandschutzmasse, enthaltend Bindemittel, Flammschutzmittel, anorganische Fasern und Weichmacher, dadurch gekennzeichnet, daß sie frei von Antimonverbindungen, Asbest und gesundheitsschädlichen Flammhemmern, insbesondere halogenhaltigen Flammhemmern ist, mit der Maßgabe, daß
a) als Bindemittel Polymere enthalten sind, wobei die Polymeren eine Glasübergangstemperatur Tg oberhalb -30 °C, eine Mindestfilmbildetemperatur MFT von ≥ 0 °C, eine Reißfestigkeit ≤ 5 N/mm² und eine Reißdehnung ≥ 400 % besitzen sollen und wobei das Bindemittel in einer Menge von 5 bis 20 Gew.-% - bezogen auf die Gesamtmasse der Brandschutzmasse - enthalten ist,
b) die als Flammschutzmittel enthaltenen Stoffe wasserunlösliche Feststoffe mit einem mittleren Korndurchmesse von 1 bis 50 µm sind,
c) die anorganischen Fasern eine mittlere Länge von 300 µm und eine mittlere Dicke von 10 µm aufweisen, wobei die Fasern in einer Gesamtmenge von 0,2 bis 27,5 Gew.-% - bezogen auf die Gesamtmasse der Brandschutzmasse - enthalten sind.

2. Brandschutzmasse nach Anspruch 1, dadurch gekennzeichnet, daß sie insgesamt halogenfrei, insbesondere chlorfrei ist.

3. Brandschutzmasse nach Anspruch 1 oder 2, dadurch gekennzeichnet, daß sie als Bindemittel wäßrige Kunststoff- oder Kunstharz-Dispersionen, insbesondere halogenfreie, wäßrige Dispersionen enthält.

4. Brandschutzmasse nach einem der vorhergehenden Ansprüche, dadurch gekennzeichnet, daß sie als Flammschutzmittel Stoffe enthält, die halogenfrei, nicht toxisch und/oder frei von toxikologisch und ökologisch bedenklichen Schwermetallverbindungen sind.

5. Brandschutzmasse nach einem der vorhergehenden Ansprüche, dadurch gekennzeichnet, daß das Flammschutzmittel in einer Menge von 10 bis 60 Gew.-%, insbesondere 20 bis 50 Gew.-%, bezogen auf die Gesamtmasse der Brandschutzmasse, enthalten ist.

6. Brandschutzmasse nach einem der vorhergehenden Ansprüche, dadurch gekennzeichnet, daß sie als Flammschutzmittel anorganische Feststoffe enthält, die beim Erhitzen endotherm reagieren, insbesondere unter Schmelzen, Sublimieren, Phasenumwandlung oder in einer Festkörperreaktion.

7. Brandschutzmasse nach Anspruch 6, dadurch gekennzeichnet, daß die Feststoffe unter Abspaltung von Gasen, insbesondere von nicht brennbaren Gasen, reagieren.

8. Brandschutzmasse nach einem der vorhergehenden Ansprüche, dadurch gekennzeichnet, daß sie als Fasern eine Mischung aus anorganischen und organischen Fasern enthält.

9. Brandschutzmasse nach Anspruch 8, dadurch gekennzeichnet, daß, bezogen auf die Gesamtmasse der Brandschutzmasse, 0,1 bis 20 Gew.-%, insbesondere 0,5 bis 10 Gew.-% anorganische Fasern und 0,1 bis 7,5 Gew.-%, insbesondere 0,1 bis 3,5 Gew.-% organische Fasern enthalten sind.

10. Brandschutzmasse nach Anspruch 8 oder 9, dadurch gekennzeichnet, daß die organischen Fasern eine mittlere Dicke von 15 µm und eine mittlere Länge von 1000 µm besitzen.

11. Brandschutzmasse nach einem der vorhergehenden Ansprüche, dadurch gekennzeichnet, daß sie als Weichmacher toxikologisch unbedenkliche Phosphorsäureester, insbesondere toxikologisch unbedenkliche, halogenfreie Phosphorsäureester, enthält.

12. Brandschutzmasse nach einem der vorhergehenden Ansprüche, dadurch gekennzeichnet, daß die Weichmacher in einer Menge von 0,1 bis 10 Gew.-%, insbesondere 1 bis 5 Gew.-%, bezogen auf die Gesamtmasse der Brandschutzmasse, enthalten sind.

13. Brandschutzmasse nach Anspruch 11 oder 12, dadurch gekennzeichnet, daß der Phosphorsäureester einen P-Gehalt ≥ 7 % besitzt.

14. Brandschutzmasse nach einem der Ansprüche 11 bis 13, dadurch gekennzeichnet, daß mindestens eine Säurefunktion des Phosphorsäureesters mit einem aromatischen Rest abgesättigt ist.

15. Verwendung der Brandschutzmasse nach einem der vorhergehenden Ansprüche zur Herstellung von Brandschutzbeschichtungen und Brandschutzabschlüssen, wie Abschottung und Verfugungen.

## Claims

1. A fireproofing compound containing binders, flameproofing agents, inorganic fibres and plasticizers, characterized in that it is free from antimony compounds, asbestos and health-damaging flame retardants, more particularly halogen-containing flame retardants, with the proviso that
a) polymers are present as the binder, the polymers being required to have a glass transition temperature Tg above -30°C, a minimum film-forming temperature MFT of ≥0°C, a tensile strength of ≤5 N/mm² and a breaking elongation of ≥400% and the binder being present in a quantity of 5 to 20% by weight, based on the total weight of the fireproofing compound,
b) the substances present as flameproofing agents are water-insoluble solids with a mean particle diameter of 1 to 50 µm,
c) the inorganic fibres have a mean length of 300 µm and a mean thickness of 10 µm, the fibres being present in a total quantity of 0.2 to 27.5% by weight, based on the total weight of the fireproofing compound.

2. A fireproofing compound as claimed in claim 1, characterized in that it is totally halogen-free and, more particularly, chlorine-free.

3. A fireproofing compound as claimed in claim 1 or 2, characterized in that it contains aqueous dispersions of plastics or synthetic resins, more particularly halogen-free aqueous dispersions, as the binder.

4. A fireproofing compound as claimed in any of the preceding claims, characterized in that it contains substances which are halogen-free, non-toxic and/or free from toxicologically and ecologically unsafe heavy metal compounds as flameproofing agents.

5. A fireproofing compound as claimed in any of the preceding claims, characterized in that the flameproofing compound is present in a quantity of 10 to 60% by weight and, more particularly, 20 to 50% by weight, based on the total weight of the fireproofing compound.

6. A fireproofing compound as claimed in any of the preceding claims, characterized in that it contains inorganic solids which react endothermally on heating, more particularly with melting, sublimation, phase transition or in a solid-state reaction, as flameproofing agents.

7. A fireproofing compound as claimed in claim 6, characterized in that the solids react with elimination of gases, more particularly non-inflammable gases.

8. A fireproofing compound as claimed in any of the preceding claims, characterized in that it contains a mixture of inorganic and organic fibres as the fibres.

9. A fireproofing compound as claimed in claim 8, characterized in that it contains 0.1 to 20% by weight and, more particularly, 0.5 to 10% by weight of inorganic fibres and 0.1 to 7.5% by weight and, more particularly, 0.1 to 3.5% by weight of organic fibres, based on the total weight of the fireproofing compound.

10. A fireproofing compound as claimed in claim 8 or 9, characterized in that the organic fibres have an average thickness of 15 µm and an average length of 1000 µm.

11. A fireproofing compound as claimed in any of the preceding claims, characterized in that it contains toxicologically safe phosphoric acid esters, more particularly toxicologically safe halogen-free phosphoric acid esters, as plasticizers.

12. A fireproofing compound as claimed in any of the preceding claims, characterized in that the plasticizers are present in a quantity of 0.1 to 10% by weight and, more particularly, 1 to 5% by weight, based on the total weight of the fireproofing compound.

13. A fireproofing compound as claimed in claim 11 or 12, characterized in that the phosphoric acid ester has a P content of ≥ 7%.

14. A fireproofing compound as claimed in any of claims 11 to 13, characterized in that at least one acid function of the phosphoric acid ester is saturated with an aromatic radical.

15. The use of the fireproofing compound according to any of the preceding claims for the production of fireproof coatings and fireproof closures, such as seals and pointings.

## Revendications

1. Matière ignifuge, contenant des liants, des agents ignifuges, des fibres inorganiques et des plastifiants,
caractérisée en ce qu'
elle est dépourvue de composés d'antimoine, d'amiante et d'agents retardant la combustion nuisibles à la santé, en particulier d'agents retardant la combustion contenant des halogènes, dans la mesure où
a) des polymères sont contenus en tant que liants, lesquels polymères doivent posséder une température de transition vitreuse Tg supérieur à -30°C, une température minimale de formation de films MFT de ≥ 0°C, une résistance à la déchirure de ≤ 5 N/mm² et une élongation à la déchirure de ≥ 400 % et où le liant est contenu en une quantité comprise entre 5 et 20 % en poids par rapport à la quantité totale de la matière ignifuge,
b) les substances contenues en tant qu'agents ignifuges sont des matières solides insolubles dans l'eau et présentent un diamètre de grain moyen compris entre 1 et 50 µm,
c) les fibres inorganiques présentent une longueur moyenne de 300 µm et une épaisseur moyenne de 10 µm, où les fibres sont contenues en une quantité totale comprise entre 0,2 et 27,5 % en poids par rapport à la quantité totale de la matière ignifuge.

2. Matière ignifuge selon la revendication 1,
caractérisée en ce qu'
elle est sans halogène dans son ensemble, en particulier sans chlore.

3. Matière ignifuge selon la revendication 1 ou 2,
caractérisée en ce qu'
elle contient en tant que liant des dispersions aqueuses de matières plastiques ou de résines synthétiques, en particulier des dispersions aqueuses sans halogène.

4. Matière ignifuge selon l'une des revendications précédentes,
caractérisée en ce qu'
elle contient en tant qu'agent ignifuge des substances qui sont sans halogènes, non toxiques et/ou libres de composés de métaux lourds à caractère toxique et nuisant à l'environnement.

5. Matière ignifuge selon l'une des revendications précédentes,
caractérisée en ce que
l'agent ignifuge est contenu en une quantité comprise entre 10 et 60 % en poids, en particulier entre 20 et 50 % en poids, par rapport à la masse totale de la matière ignifuge.

6. Matière ignifuge selon l'une des revendications précédentes,
caractérisée en ce qu'
elle contient en tant qu'agent ignifuge des matières solides inorganiques présentant des réactions endothermes lorsqu'elles sont chauffées, en particulier la fonte, la sublimation, une transition de phase ou une réaction entre corps solides.

7. Matière ignifuge selon la revendication 6,
caractérisée en ce que
les matières solides réagissent sous séparation de gaz, en particulier de gaz non combustibles.

8. Matière ignifuge selon l'une des revendications précédentes,
caractérisée en ce qu'
elle contient en tant que fibres un mélange de fibres inorganiques et organiques.

9. Matière ignifuge selon la revendication 8,
caractérisée en ce que
sont contenues, par rapport à la masse totale de matière ignifuge, 0,1 à 20 % en poids, en particulier 0,5 à 10 % en poids de fibres inorganiques et 0,1 à 7,5 % en poids, en particulier 0,1 à 3,5 % en poids de fibres organiques.

10. Matière ignifuge selon la revendication 8 ou 9,
caractérisée en ce que
les fibres organiques possèdent une épaisseur moyenne de 15 µm et une longueur moyenne de 1 000 µm.

11. Matière ignifuge selon l'une des revendications précédentes,
caractérisée en ce qu'
elle contient en tant que plastifiants des esters d'acide phosphorique à caractère non toxiques, en particulier des esters d'acide phosphorique à caractère non toxiques et sans halogène.

12. Matière ignifuge selon l'une des revendications précédentes,
caractérisée en ce que
les plastifiants sont contenus en une quantité comprise entre 0,1 et 10 % en poids, en particulier comprise entre 1 et 5 % en poids par rapport à la masse totale de matière ignifuge.

13. Matière ignifuge selon la revendication 11 ou 12,
caractérisée en ce que
l'ester d'acide phosphorique présente une teneur en P de ≥ 7 %.

14. Matière ignifuge selon l'une des revendications 11 à 13,
caractérisée en ce qu'
au moins une des fonctions acides de l'ester d'acide phosphorique soit saturée par un radical aromatique.

15. Utilisation de la matière ignifuge selon l'une des revendications précédentes pour la fabrication d'enductions ignifuges et de fermetures ignifuges, tels que des cloisonnements et des jointoiements.
